# EUROPEAN PATENT SPECIFICATION

(11) **EP 3 905 634 B1**
(45) Date of publication and mention of the grant of the patent: **20.12.2023**
(21) Application number: 21171472.0
(22) Date of filing: 30.04.2021
(51) Int. Cl.: H04L 9/40

(54) **NETWORK DEFENSE METHOD AND SECURITY DETECTION DEVICE**
VERFAHREN ZUR NETZWERKVERTEIDIGUNG UND SICHERHEITSDETEKTIONSVORRICHTUNG
PROCÉDÉ DE DÉFENSE DE RÉSEAU ET DISPOSITIF DE DÉTECTION DE SÉCURITÉ

(30) Priority: 30.04.2020 CN 202010360350
(43) Date of publication of application: 03.11.2021
(73) Proprietor: HUAWEI TECHNOLOGIES CO., LTD., Shenzhen, Guangdong 518129, P.R. (CN)
(72) Inventor: ZHANG, Zhenwei, Shenzhen, 518129, P.R. (CN)
(74) Representative: Gill Jennings & Every LLP

(56) References cited:
- WO-A1-99/63727
- US-A1- 2011 099 631
- CHO CHOONGHEE ET AL: "A Sophisticated Packet Forwarding Scheme with Deep Packet Inspection in an OpenFlow Switch", 2016 INTERNATIONAL CONFERENCE ON SOFTWARE NETWORKING (ICSN), IEEE, 23 May 2016 (2016-05-23), pages 1-5, XP032917373, DOI: 10.1109/ICSN.2016.7501921 [retrieved on 2016-06-29]

## Description

### TECHNICAL FIELD

This application relates to the field of communications technologies, and in particular, to a network defense method and a security checking device.

### BACKGROUND

With development of information and communications technology (information and communications technology, ICT), network attack events proliferate. A campus network, for example, an intranet of an enterprise, needs to defend against a network attack from an external network and a network attack launched from the campus network.

Currently, a checking point is usually deployed on a user access side of the campus network, to defend against malicious traffic that threatens network security. However, depending only on the checking point on the access side, the campus network has a weak defence performance. The malicious traffic cannot be effectively blocked from accessing the campus network. As a result, the malicious traffic is spread on the campus network and security of the campus network is threatened.

WO9963727A1 describes a system that distributes processing-intensive loads among a plurality of intermediate stations in a computer internetwork.

The publication by ChoongHee Cho et al., titled, "A Sophisticated Packet Forwarding Scheme with Deep Packet Inspection in an OpenFlow Switch", 2016 INTERNATIONAL CONFERENCE ON SOFTWARE NETWORKING (ICSN), IEEE, (20160523), pages 1 - 5, discusses supporting an extended view of the OpenFlow architecture by inspecting not only a packet header but also the payload information of the packets.

US2011099631A1 describes distribution of network processing load among a set of packet processing devices.

### SUMMARY

Embodiments of this application provide a network defence method and a security checking device, to resolve a problem of malicious traffic spreading on a campus network.

According to a first aspect, embodiments of this application provide a network defense method according to appended claim 1.

Alternatively, the security checking device forwards the first packet when security checking on the first packet is not completed and a security checking capability of the security checking device is insufficient.

In the embodiments of this application, when receiving a packet on which the security checking is not completed, the security checking device determines, based on the security checking capability of the security checking device, to check the packet or forward the packet to another security checking device for checking. The security checking device may be any network device on a campus network. Security checking capabilities of a plurality of network devices can be used to check the packet. This effectively prevents malicious traffic from being spread on the campus network and improves security defense performance.

In an optional implementation, the method further includes: The security checking device determines, based on whether the first packet has a check flag, whether the security checking on the first packet is completed.

In the embodiments of this application, a check flag is added to a packet on which the security check is completed. The security checking device can quickly determine, by determining whether a packet has a check flag, whether the security check on the packet is completed. This helps improve checking efficiency.

In an optional implementation, the method further includes: The security checking device checks whether a value of a specified field of the first packet is the check flag. The specified field is associated with a type of the security checking.

In the embodiments of this application, a specified field is configured for a packet to indicate related-type security checking. The security checking device may determine, by checking whether a value of the specified field in the packet is a check flag, whether the packet passes the related-type security checking indicated by the specified field.

In an optional implementation, the method further includes:
Before checking or forwarding the first packet, if a checking record of a flow to which the first packet belongs indicates that the flow is insecure, the security checking device discards the first packet.

The security checking device updates, based on a checking result of the first packet, the checking record of the flow to which the first packet belongs.

In an optional implementation, when the first packet belongs to a new flow, the method further includes: constructing a flow entry of the new flow.

According to a second aspect, embodiments of this application provide a security checking device according to appended claim 8.

In the embodiments of this application, when receiving a packet on which the security check is not completed, the security checking device determines, based on the security checking capability of the security checking device, to check the packet or forward the packet to another security checking device for checking. The security checking device may be any network device on a campus network. Security checking capabilities of a plurality of network devices on the campus network can be used to check the packet. Compared with the prior art in which a checking point is deployed only at an access layer, this effectively prevents malicious traffic from being spread on the campus network and improves security defence performance.

In an optional implementation, the processing module is further configured to determine, based on whether the first packet has a check flag, whether the security checking on the first packet is completed.

In an optional implementation, the processing module is further configured to check whether a value of a specified field of the first packet is the check flag. The specified field is associated with a type of the security check.

In the embodiments of this application, a specified field is configured for a packet to indicate related-type security check. The security checking device may determine, by checking whether a value of the specified field in the packet is a check flag, whether the packet passes the related-type security check indicated by the specified field.

In an optional implementation, the processing module is further configured to:
before checking or forwarding the first packet, if a checking record of a flow to which the first packet belongs indicates that the flow is insecure, discard the first packet.
The processing module may update, based on a checking result of the first packet,
the checking record of the flow to which the first packet belongs.

In the embodiments of this application, the security checking device performs, based on the security checking capability of the security checking device, security checking that can be performed on a packet. Security checking capabilities of different security checking devices on the campus network can be used to perform one or more types of security checking on the packet. According to a fifth aspect, embodiments of this application provide a computer-readable storage medium according to appended claim 15.

### BRIEF DESCRIPTION OF DRAWINGS

FIG. 1 is a schematic diagram of a network architecture according to an embodiment of this application;
FIG. 2 is a schematic structural diagram of a communications system according to an embodiment of this application;
FIG. 3 is a schematic flowchart of a network defense method according to an embodiment of this application;
FIG. 4 is a schematic flowchart of another network defense method according to an embodiment of this application;
FIG. 5 is a schematic structural diagram of a security checking device according to an embodiment of this application;
FIG. 6 is a schematic structural diagram of another security checking device according to an embodiment of this application;
FIG. 7 is a schematic structural diagram of a communications apparatus according to an embodiment of this application; and
FIG. 8 is a schematic structural diagram of another communications apparatus according to an embodiment of this application.

### DESCRIPTION OF EMBODIMENTS

In the following, some terms in this application are described, to help a person skilled in the art have a better understanding.

### (1) Campus network

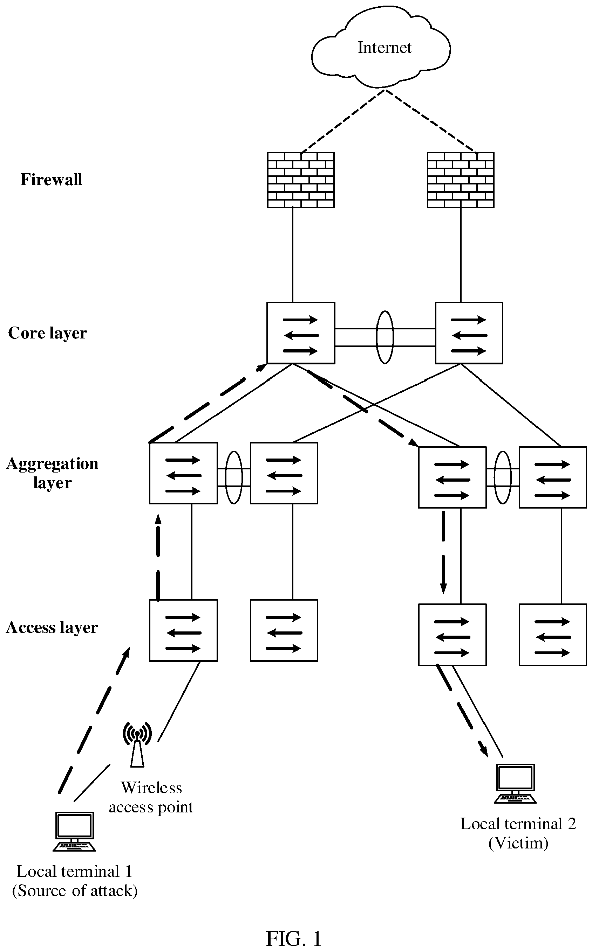

A campus network (campus network) refers to an internal network of an organization, for example, an intranet of an enterprise or a school VPN of a university. A routing structure of the campus network is managed by an organization. Security products, such as a firewall, are usually deployed at an internet egress of the campus network to defend against an attack from an external network. As shown in a network architecture in FIG. 1, the campus network usually uses a three-layer network architecture, including an access layer, an aggregation layer, and a core layer. The access layer provides access from a local terminal to the campus network for a network application. The aggregation layer is a boundary between the core layer and the access layer. The core layer is used to provide intersection transmission for receiving and forwarding network traffic.

### (2) Network traffic

In embodiments of this application, network traffic refers to a volume of data transmitted in a campus network, and includes packets of a plurality of flows. Network traffic that threatens campus network security is referred to as malicious traffic. For example, a network attack between local terminals that access the campus network causes transmission of the malicious traffic on the campus network. In the embodiments of this application, a forwarding path of the malicious traffic on the campus network is further shown by using a dashed line with an arrow in FIG. 1. The malicious traffic is transmitted to the campus network by a local terminal 1 that is used as a source of attack, and then, the malicious traffic is transmitted from a network device at an access layer -> a network at an aggregation layer ->a network device at a core layer -> a network device at the aggregation layer ->a network device at the access layer. Finally, the malicious traffic is transmitted to a local terminal 2 that is attacked. The local terminal may access the campus network in a wireless connection manner by using a wireless access point (access point, AP), or may access the campus network in a wired connection manner. (3) In this application, "a plurality of" refers to two or more than two. The term "and/or" describes an association relationship for describing associated objects and represents that three relationships may exist. For example, A and/or B may represent the following three cases: Only A exists, both A and B exist, and only B exists. In addition, it should be understood that although terms such as "first" and "second" may be used in the embodiments of the present invention to describe data, the data is not limited to these terms. These terms are merely used to distinguish the data from each other.

The method provided in the embodiments of this application may be applied to a communications system on the campus network. The communications system includes network devices deployed at the access layer, the aggregation layer, and the core layer of the campus network. For network traffic accessing the campus network, security checking is performed on the network traffic based on a security checking capability of a network device through which a forwarding path of the network traffic passes.

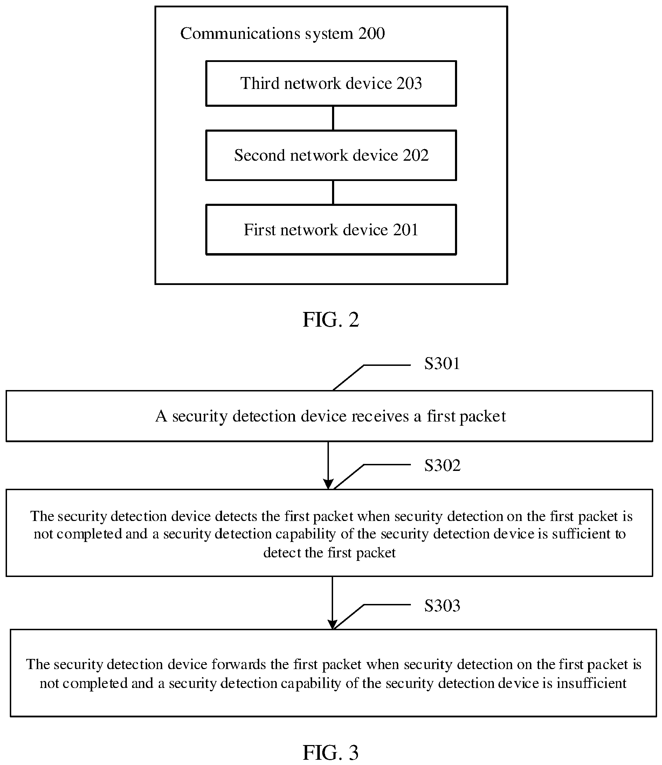

FIG. 2 shows an example of a communications system 200 to which a method according to an embodiment of this application is applicable. The communications system 200 includes a first network device 201 deployed at an access layer, a second network device 202 deployed at an aggregation layer, and a third network device 203 deployed at a core layer.

The first network device 201 is configured to perform security checking on a packet in network traffic that accesses a campus network by using the first network device.

The second network device 202 is configured to perform, based on a security checking capability of the second network device 202, security checking or forwarding on a packet that is transmitted at the access layer or the core layer and on which the security check is not completed.

The third network device 203 is configured to perform, based on a security checking capability of the third network device 203, security checking or forwarding on a packet that is transmitted at the aggregation layer and on which the security check is not completed.

In this embodiment of this application, network devices at different layers on the campus network are used as security checking devices to perform the security check on network traffic by using expansion of a network traffic forwarding path, so that a security defence capability of the campus network may be improved.

The following describes some optional implementations of the embodiment in FIG. 3.

Referring to FIG. 3, an embodiment of this application provides a network defense method. The method may be applied to any network device used as a security checking device in a campus network, and a network device having a security checking capability is referred to as the security checking device below. The method may be implemented by performing the following steps:
Step 301: The security checking device receives a first packet.
Step 302: The security checking device checks the first packet when security checking on the first packet is not completed and a security checking capability of the security checking device is sufficient to check the first packet.
Step 303: The security checking device forwards the first packet when security checking on the first packet is not completed and a security checking capability of the security checking device is insufficient.

In the embodiment of this application, when receiving a packet on which the security checking is not completed, the security checking device determines, based on the security checking capability of the security checking device, to check the packet or forward the packet to another security checking device for checking. The security checking device may be any network device on the campus network. Security checking capabilities of a plurality of network devices on the campus network can be used to perform security checking on the packet. Compared with the prior art in which a checking point is deployed only at an access layer, this effectively prevents malicious traffic from being spread on the campus network and improves security defense performance.

In an optional implementation, a check flag may be added to a packet to indicate that the security checking on the packet is completed. Therefore, the security checking device may determine, based on whether the first packet has a checking flag, whether the security checking on the first packet is completed. The check flag indicates whether a checking result of the packet is secure or insecure.

In the embodiment of this application, a checking flag is added to a packet on which the security checking is completed. The security checking device can quickly determine, by determining whether a packet has a check flag, whether the security checking on the packet is completed. This helps improve checking efficiency.

In an optional implementation, a check flag may be added to a specified field in the packet on which the security checking is completed. The security checking device may determine, by checking whether a value of a specified field of the first packet is the check flag, whether the security checking on the first packet is completed.

The specified field is used to indicate security checking corresponding to the packet, and may also be referred to as a check flag bit. A byte occupied by the specified field in the packet may be fixedly configured, or may be configured through joint negotiation by security checking devices on the campus network. This is not limited herein. For example, in a virtual extensible local area network (Virtual Extensible Local Area Network, VXLAN), an 8-bit reserved (Reserved) bit in a VXLAN packet header shown in Table 1 may be used to indicate the security check corresponding to the packet. In a conventional local area network, the last two bits in a type of service (type of service, ToS) field of an internet protocol (Internet Protocol version 4, IPv4) packet header shown in Table 2, namely, a reserved (Reserved) bit, may be used to indicate the security check corresponding to the packet.

**Table 1**

| | | | |
|---|---|---|---|
| VXLAN Flags (16 bits) | Group ID (16 bits) | VNI (24 bits) | Reserved (8 bits) |

The VXLAN flags are VXLAN flag bits and occupy 16 bits in the VXLAN packet header. The group ID is a group identity (Identity, ID) and occupies 16 bits in the VXLAN packet header. The VNI is a VXLAN network identifier (VXLAN Network Identifier, VNI) and occupies 24 bits in the VXLAN packet header. The reserved is a reserved bit and occupies 8 bits in the VXLAN packet header.

**Table 2**

| | |
|---|---|
| DSCP (6 bits) | Reserved (2 bits) |

The DSCP is a differentiated services code point (differentiated services code point, DSCP) and occupies the first 6 bits in a ToS field of an IPv4 packet header. The reserved is a reserved bit and occupies the last 2 bits in the ToS field of the IPv4 packet header.

In an optional implementation, the security check on a packet includes one or more types of security checking. One or more specified fields may be configured for the packet, and the specified field is associated with a type of the security check. For example, one specified field corresponds to one type of the security check. The security checking device may determine, by checking whether a value of any specified field in one or more specified fields of the first packet is a check flag, whether multiple related types of security checking of the any specified field are completed on the first packet.

During specific implementation, a byte occupied by the any field may be set based on an actual situation, and is not limited herein. For example, a byte occupied by any field includes 1 bit (bit). Table 3 shows that two bits obtained by dividing the 8-bit reserved (Reserved) bit in the VXLAN packet header are configured as a first specified field associated with an intrusion prevention system (intrusion prevention system, IPS), namely, an IPS flag (IPS flag) in Table 3, and a second specified field associated with antivirus (anti-virus, AV) checking, namely, an AV flag (AV Flag) in Table 3.

**Table 3**

| | | |
|---|---|---|
| IPS Flag (1 bit) | AV Flag (1 bit) | Reserved (6 bits) |

For example, when the byte occupied by any specified field includes 1 bit, and a value of a check flag is 0 or 1, if a value of any specified field is not the check flag, for example, the value of any specified field is null, it indicates that the related-type security check of the any specified field is not completed on the first packet. Alternatively, if a value of any specified field is 0, it indicates that related-type security check of the any specified field is completed on the first packet, and a check result is that the any specified field is insecure. Alternatively, if a value of any specified field is 1, it indicates that related-type security check of the any specified field is completed on the first packet, and a check result is that the any specified field is secure.

In this embodiment of this application, a specified field is configured for a packet to indicate related-type security check. The security checking device may quickly determine, by checking whether a value of the specified field in the packet is a check flag, whether the related-type security check indicated by the specified field is completed on the packet.

In an optional implementation, the security checking on the first packet includes one or more types of security checking. If at least one of the one or more types of security check is not completed on the first packet, the security checking device determines that the security checking on the first packet is not completed. Specifically, when at least one of the one or more specified fields of the first packet is not the check flag, the security checking device determines that the security check on the first packet is not completed.

In an implementation, the security checking device may determine, based on security checking load of the security checking device (not falling within the scope of the claims) and/or a security checking type that can be checked by the security checking device (falling within the scope of the claims), whether the security checking capability of the security checking device is sufficient to check the first packet.

During specific implementation, if the security checking load of the security checking device is overloaded, it is determined that the security checking capability of the security checking device is insufficient to check the first packet. Alternatively, if a type of the security checking that is not completed on the first packet does not belong to the type that can be checked by the security checking device, it is determined that the security checking capability of the security checking device is insufficient to check the first packet. If the security checking load of the security checking device is not overloaded and the security checking device can perform at least one type of the security check that is not completed by the security checking device on the first packet, it is determined that the security checking capability of the security checking device is sufficient to check the first packet.

In an optional implementation, when determining that the security check on the first packet is not completed, the security checking device may first determine whether the security checking device stores a checking record of a flow to which the first packet belongs. If the security checking device stores the checking record of the flow to which the first packet belongs, the security checking device adds the check flag to the first packet based on the checking record of the flow to which the first packet belongs. Otherwise, the security checking device needs to determine whether the security checking capability of the security checking device is sufficient to check the first packet again.

During specific implementation, a check flow table may be set on the security checking device, to store identification information and a checking record of a flow to which a packet checked by the security checking device belongs. The identification information of the flow may be represented by using 5-tuple information, and the 5-tuple information includes a source IP address, a source port, a destination IP address, a destination port, and a transport layer protocol. The checking record of the flow includes a check result of the packet belonging to the flow. For determining whether the security checking device stores the checking record of the flow to which the first packet belongs, refer to the following implementation: determining, based on identification information of the flow to which the first packet belongs, whether the first packet matches a check flow table in the security checking device to which the first packet belongs. In other words, it is determined whether the identification information of the flow to which the first packet belongs matches identification information stored in the check flow table in the security checking device to which the first packet belongs.

In an optional implementation, when the first packet does not match the check flow table of the security checking device, in other words, when the first packet belongs to a new flow, the security checking device creates a check flow table corresponding to the new flow.

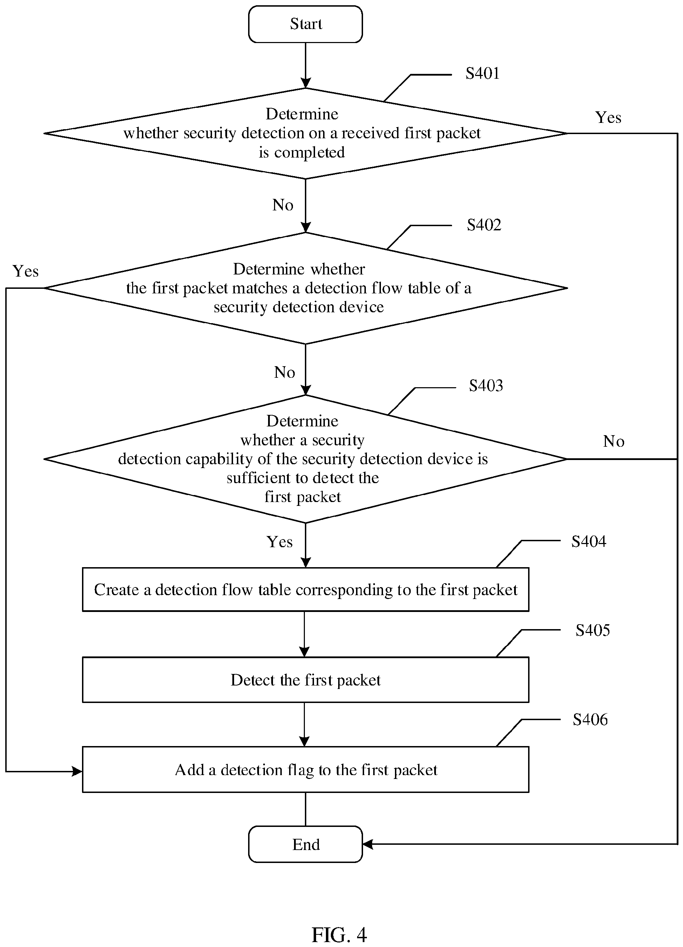

Further, as shown in FIG. 4, an embodiment of this application provides another network defense method. The method is performed by a security checking device, and includes the following steps. Step S401: Determine whether security checking on a received first packet is completed. If the security checking on the received first packet is not completed, step S402 is performed. If the security checking on the received first packet is completed, no further action is required.

Step S402: Determine whether the first packet matches a check flow table of the security checking device. If the first packet does not match the check flow table of the security checking device, step S403 is performed. If the first packet matches the check flow table of the security checking device, step S406 is performed.

Step S403: Determine whether a security checking capability of the security checking device is sufficient to check the first packet. If the security checking capability of the security checking device is sufficient to check the first packet, step S404 is performed. If the security checking capability of the security checking device is not sufficient to check the first packet, no further action is required.

Step S404: Create a check flow table corresponding to the first packet.

Step S405: Check the first packet.

Step S406: Add a check flag to the first packet.

During specific implementation, if the first packet matches the check flow table of the security checking device, a checking result of the first packet is determined based on a checking record stored in the check flow table, and then the check flag is added to the first packet based on the checking result. If the first packet does not match the checking flow table of the security checking device, step 405 is performed. To be specific, after the first packet is checked and the checking result is determined, the check flag is added to the first packet based on the checking result.

In an optional implementation, the security checking device updates, based on the checking result of the first packet, a check record of a flow to which the first packet belongs.

In an optional implementation, that the security checking device checks the first packet when security checking on the first packet is not completed and a security checking capability of the security checking device is sufficient to check the first packet includes:
When first-type security checking is completed but second-type security checking is not completed on the first packet and the security checking capability of the security checking device is sufficient to perform the second-type security checking on the first packet, the security checking device performs the second-type security checking on the first packet.

In this embodiment of this application, the security checking device performs, based on the security checking capability of the security checking device, security checking that can be performed on a packet. Security checking capabilities of different security checking devices on a campus network can be used to perform one or more types of security checking on the packet. Further, after the security checking device performs the second-type security check on the first packet, if the security checking capability of the security checking device is sufficient to perform third-type security checking on the first packet, the security checking device performs the third-type security check on the first packet. Alternatively, after the security checking device performs the second-type security check on the first packet, if the security checking capability of the security checking device is insufficient to perform third-type security checking on the first packet, the security checking device forwards the first packet.

In an optional implementation, when a check result of the security checking on the received first packet is insecure, if the first packet is indicated to be discarded, the security checking device discards the first packet. Alternatively, when a check result of the security checking by the security checking device on the first packet is insecure, if the first packet is indicated to be discarded, the security checking device discards the first packet.

In an optional implementation, before checking or forwarding the first packet, if the check record of the flow to which the first packet belongs indicates that the flow is insecure, the security checking device discards the first packet. During specific implementation, if the received first packet matches the check flow table of the security checking device, and a discard mark is configured for the check flow table of the flow to which the first packet belongs, the security checking device discards the first packet. The discard mark indicates that the flow is insecure.

In addition, to avoid a case in which security checking on some packets may be missed because there is a small quantity of network devices through which the packets pass on the campus network, in an optional implementation, a network device at a core layer through which network traffic needs to pass when being spread on the campus network may be set. In this case, a forwarding path of the foregoing first packet includes a target network device at the core layer on the campus network.

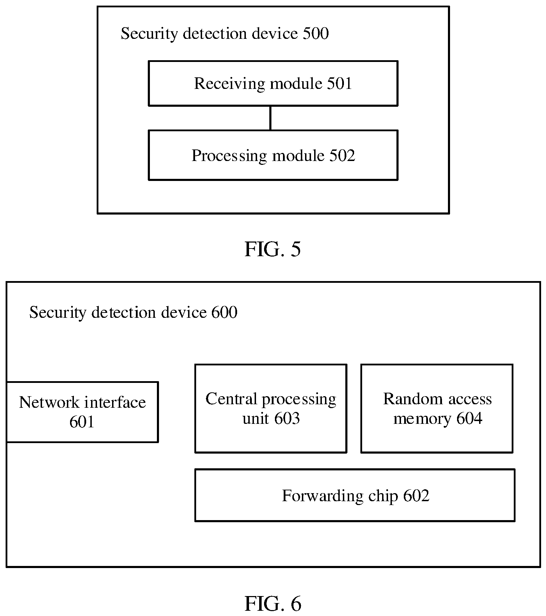

Based on a same concept, referring to FIG. 5, an embodiment of this application provides a security checking device 500, including:
a receiving module 501, configured to receive a first packet; and
a processing module 502, configured to: check the first packet when security checking on the first packet is not completed and a security checking capability of the security checking device is sufficient to check the first packet; or forward the first packet when security checking on the first packet is not completed and a security checking capability of the security checking device is insufficient.

In the embodiment of this application, when receiving a packet on which the security checking is not completed, the security checking device determines, based on the security checking capability of the security checking device, to check the packet or forward the packet to another security checking device for checking. The security checking device may be any network device on a campus network. Security checking capabilities of a plurality of network devices on the campus network can be used to check the packet. Compared with the prior art in which a checking point is deployed only at an access layer, this effectively prevents malicious traffic from being transmitted on the campus network and improves security defense performance.

In an optional implementation, the processing module 502 is further configured to determine, based on whether the first packet has a check flag, whether security checking on the first packet is completed. A check flag is used to indicate a checking result of a packet as secure or insecure.

In an optional implementation, the processing module 502 is further configured to check whether a value of a specified field in the first packet is the check flag. The specified field is associated with a type of the security checking.

In the embodiment of this application, a specified field is configured for a packet to indicate related-type security checking. The security checking device may determine, by checking whether a value of the specified field in the packet is a check flag, whether the packet passes the related-type security check indicated by the specified field.

In an optional implementation, the processing module 502 is further configured to:
before checking or forwarding the first packet, determine that a check record of a flow to which the first packet belongs indicates that the flow is insecure, and discard the first packet; and
update, based on a checking result of the first packet, the check record of the flow to which the first packet belongs.

In an optional implementation, the processing module 502 is further configured to: when first-type security checking is completed but second-type security checking is not completed on the first packet and the security checking capability of the security checking device is sufficient to perform the second-type security checking on the first packet, perform the second-type security checking on the first packet.

In this embodiment of this application, the security checking device performs, based on the security checking capability of the security checking device, security checking that can be performed on a packet. Security checking capabilities of different security checking devices on the campus network can be used to perform one or more types of security checking on the packet. Further, referring to FIG. 6, an embodiment of this application further provides another security checking device 600, including a network interface 601, a forwarding chip 602, a central processing unit (central processing unit, CPU) 603, and a random access memory (random access memory, RAM) 604.

The network interface 601 is configured to receive a first packet.

The random access memory 604 is configured to store a check flow table of a flow to which a packet checked by using the security checking device belongs.

The forwarding chip 602 is configured to: when the first packet does not have a check flag, determine whether the first packet matches the check flow table in the random access memory 604. The central processing unit 603 is configured to: when the first packet does not match the check flow table in the random access memory 604, perform security checking on the first packet based on a security checking capability of the central processing unit 603.

The forwarding chip 602 is further configured to: when the first packet matches the check flow table in the random access memory 604, add the check flag to the first packet based on a check record of a flow in the check flow table; or when the first packet does not match the check flow table in the random access memory 604, add the check flag to the first packet based on a checking result of the security check performed by the central processing unit 603 on the first packet.

In this embodiment of this application, the forwarding chip first determines whether the check flag can be added to the first packet based on the stored check flow table. When the check result of the first packet cannot be determined based on the stored check flow table, the central processing unit performs the security checking on the first packet, so that load of the central processing unit can be reduced, and processing performance of the central processing unit can be effectively improved.

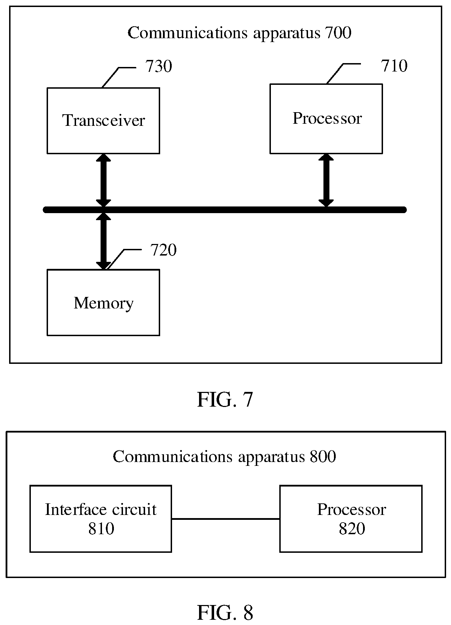

Based on a same concept, FIG. 7 shows a communications apparatus 700 provided in this application. For example, the communications apparatus 700 may be a chip or a chip system. Optionally, in this embodiment of this application, the chip system may include a chip, or may include a chip and another discrete component.

The communications apparatus 700 may include at least one processor 710. The apparatus 700 may further include at least one memory 720, configured to store a computer program, a program instruction, and/or data. The memory 720 is coupled to the processor 710. Coupling in this embodiment of this application may be indirect coupling or a communication connection between apparatuses, units, or modules in an electrical form, a mechanical form, or another form, and is used for information exchange between the apparatuses, the units, or the modules. The processor 710 may cooperate with the memory 720. The processor 710 may execute the computer program stored in the memory 720. Optionally, at least one of the at least one memory 720 may be included in the processor 710.

The communications apparatus 700 may further include a transceiver 730, and the communications apparatus 700 may exchange information with another device by using the transceiver 730. The transceiver 730 may be a circuit, a bus, a transceiver, or any other apparatus that may be configured to exchange information.

In a possible implementation, the communications apparatus 700 may be applied to the foregoing security checking device. Specifically, the communications apparatus 700 may be the foregoing security checking device, or may be an apparatus that can support the foregoing security checking device in implementing any one of the foregoing embodiments. The memory 720 stores a computer program, a program instruction, and/or data that are/is necessary for implementing a function of the security checking device in any one of the foregoing embodiments. The processor 710 may execute the computer program stored in the memory 720, to complete the method in any one of the foregoing embodiments.

In this embodiment of this application, a specific connection medium among the transceiver 730, the processor 710, and the memory 720 is not limited. In the embodiment of this application, the memory 720, the processor 710, and the transceiver 730 are connected to each other through a bus in FIG. 7. The bus is represented by using a thick line in FIG. 7, and a connection manner between other components is merely described as an example, and is not limited thereto. The bus may be classified into an address bus, a data bus, a control bus, and the like. For ease of representation, only one thick line is used to represent the bus in FIG. 7, but this does not mean that there is only one bus or only one type of bus.

In the embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in the embodiments of this application. The general-purpose processor may be a microprocessor or any conventional processor or the like. The steps of the method disclosed with reference to the embodiments of this application may be directly performed by a hardware processor, or may be performed by using a combination of hardware in the processor and a software module.

In the embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory may further be any other medium that can be configured to carry or store expected program code in a form of an instruction or a data structure and that can be accessed by a computer, but is not limited thereto. The memory in the embodiment of this application may alternatively be a circuit or any other apparatus that can implement a storage function, and is configured to store the computer program, the program instruction, and/or the data.

Based on the foregoing embodiments, referring to FIG. 8, an embodiment of this application further provides another communications apparatus 800, including an interface circuit 810 and a processor 820.

The interface circuit 810 is configured to receive a code instruction and transmit the code instruction to the processor 820.

The processor 820 is configured to run the code instruction to perform the method in any one of the foregoing embodiments.

Based on the foregoing embodiments, the embodiment of this application further provides a computer-readable storage medium. The computer-readable storage medium stores an instruction, and when the instruction is executed, the method performed by the security checking device in any one of the foregoing embodiments is implemented. The computer-readable storage medium may include: any medium that can store program code, for example, a USB flash drive, a removable hard disk, a read-only memory, a random access memory, a magnetic disk, or an optical disc.

A person skilled in the art should understand that the embodiment of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams. These computer program instructions may be stored in a computer-readable memory that can indicate the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A network defence method, comprising:
receiving (S301), by a security checking device on a campus network, a first packet;
checking (S302), by the security checking device, the first packet when security checking on the first packet is not completed and a security checking capability of the security checking device is sufficient to check the first packet; and
forwarding (S303), by the security checking device to another security checking device for checking, the first packet when security checking on the first packet is not completed and a security checking capability of the security checking device is insufficient, **characterized in that** the security checking capability is a security checking type that can be checked by the security checking device and wherein the checking comprises:
when first-type security checking is completed but second-type security checking is not completed on the first packet and the security checking capability of the security checking device is sufficient to perform the second-type security checking on the first packet, performing, by the security checking device, the second-type security checking on the first packet,
wherein the first-type security checking and second-type security checking is configured to prevent malicious traffic from being transmitted on the campus network.

2. The method according to claim 1, wherein the method further comprises:
determining, by the security checking device based on whether the first packet has a check flag, whether the security checking on the first packet is completed.

3. The method according to claim 1 or 2, wherein the check flag is associated with a type of security check.

4. The method according to any preceding claim, wherein the method further comprises:
before checking or forwarding the first packet, if a checking record of a flow to which the first packet belongs indicates that the flow is insecure, discarding, by the security checking device, the first packet.

5. The method according to any preceding claim, wherein the types of security checking comprise Intrusion Prevention System and Antivirus.

6. The method according to any preceding claim, wherein the another security checking device is in a different layer of the campus network than the security checking device, wherein the campus network comprises an access layer, an aggregation layer and a core layer.

7. The method according to any preceding claim, wherein the first packet is received from a network device in a different layer of the campus network than the security checking device, wherein the campus network comprises an access layer, an aggregation layer and a core layer.

8. A security checking device (500), said security checking device (500) configured to be deployed on a campus network and comprising:
a receiving module (501), configured to receive a first packet; and
a processing module (502), configured to: check the first packet when security checking on the first packet is not completed and a security checking capability of the security checking device is sufficient to check the first packet; and forward the first packet to another security checking device for checking when security checking on the first packet is not completed and a security checking capability of the security checking device is insufficient, **characterized in that** the security checking capability is a security checking type that can be checked by the security checking device and wherein the processing module is further configured to:
when first-type security checking is completed but second-type security checking is not completed on the first packet and the security checking capability of the security checking device is sufficient to perform the second-type security checking on the first packet, perform the second-type security checking on the first packet,
wherein the first-type security checking and second-type security checking is configured to prevent malicious traffic from being transmitted on the campus network.

9. The security checking device according to claim 8, wherein the processing module is further configured to determine, based on whether the first packet has a check flag, whether the security checking on the first packet is completed.

10. The security checking device according to claim 8 or 9, wherein the check flag is associated with a type of security check.

11. The security checking device according to any of claims 8 to 10, wherein the processing module is further configured to:
before checking or forwarding the first packet, if a checking record of a flow to which the first packet belongs indicates that the flow is insecure, discard the first packet.

12. The security checking device according to any of claims 8 to 11, wherein the types of security checking comprise Intrusion Prevention System and Antivirus.

13. The security checking device according to any of claims 8 to 12, wherein the another security checking device is in a different layer of the campus network than the security checking device, wherein the campus network comprises an access layer, an aggregation layer and a core layer.

14. The security checking device according to any of claims 8 to 13, wherein the first packet is received from a network device in a different layer of the campus network than the security checking device, wherein the campus network comprises an access layer, an aggregation layer and a core layer.

15. A computer-readable storage medium, wherein the computer-readable storage medium stores an instruction, and when the instruction is executed, the method according to any one of claims 1 to 7 is implemented.

## Patentansprüche

1. Netzverteidigungsverfahren, das Folgendes umfasst:
Empfangen (S301) eines ersten Pakets durch eine Sicherheitsprüfvorrichtung in einem Campusnetz;
Prüfen (S302) des ersten Pakets durch die Sicherheitsprüfvorrichtung, wenn die Sicherheitsprüfung an dem ersten Paket nicht abgeschlossen ist und eine Sicherheitsprüffähigkeit der Sicherheitsprüfvorrichtung ausreichend ist, um das erste Paket zu prüfen; und
Weiterleiten (S303) des ersten Pakets durch die Sicherheitsprüfvorrichtung zu einer weiteren Sicherheitsprüfvorrichtung zum Prüfen, wenn die Sicherheitsprüfung an dem ersten Paket nicht abgeschlossen ist und eine Sicherheitsprüffähigkeit der Sicherheitsprüfvorrichtung unzureichend ist, **dadurch gekennzeichnet, dass** die Sicherheitsprüffähigkeit ein Sicherheitsprüftyp ist, der durch die Sicherheitsprüfvorrichtung geprüft werden kann, und wobei die Prüfung Folgendes umfasst:
wenn eine Sicherheitsprüfung eines ersten Typs abgeschlossen ist, aber eine Sicherheitsprüfung eines zweiten Typs an dem ersten Paket nicht abgeschlossen ist und die Sicherheitsprüffähigkeit der Sicherheitsprüfvorrichtung ausreichend ist, um die Sicherheitsprüfung des zweiten Typs an dem ersten Paket auszuführen, Ausführen der Sicherheitsprüfung des zweiten Typs an dem ersten Paket durch die Sicherheitsprüfvorrichtung,
wobei die Sicherheitsprüfung des ersten Typs und die Sicherheitsprüfung des zweiten Typs konfiguriert sind, zu verhindern, dass schädlicher Verkehr in dem Campusnetz übertragen wird.

2. Verfahren nach Anspruch 1, wobei das Verfahren ferner Folgendes umfasst:
Bestimmen, ob die Sicherheitsprüfung an dem ersten Paket abgeschlossen ist, durch die Sicherheitsprüfvorrichtung basierend darauf, ob das erste Paket einen Prüf-Merker aufweist.

3. Verfahren nach Anspruch 1 oder 2, wobei der Prüf-Merker einem Typ der Sicherheitsprüfung zugeordnet ist.

4. Verfahren nach einem vorhergehenden Anspruch, wobei das Verfahren ferner Folgendes umfasst:
vor dem Prüfen oder Weiterleiten des ersten Pakets, falls ein Prüfdatensatz eines Flusses, zu dem das erste Paket gehört, angibt, dass der Fluss unsicher ist, Verwerfen, durch die Sicherheitsprüfvorrichtung, des ersten Pakets.

5. Verfahren nach einem vorhergehenden Anspruch, wobei die Typen der Sicherheitsprüfung ein Eindringverhinderungssystem und Antivirus umfassen.

6. Verfahren nach einem vorhergehenden Anspruch, wobei sich die weitere Sicherheitsprüfvorrichtung in einer anderen Schicht des Campusnetzes als jener der Sicherheitsprüfvorrichtung befindet, wobei das Campusnetz eine Zugriffsschicht, eine Aggregationsschicht und eine Kernschicht umfasst.

7. Verfahren nach einem vorhergehenden Anspruch, wobei das erste Paket von einer Netzvorrichtung in einer anderen Schicht des Campusnetzes als jener der Sicherheitsprüfvorrichtung empfangen wird, wobei das Campusnetz eine Zugriffsschicht, eine Aggregationsschicht und eine Kernschicht umfasst.

8. Sicherheitsprüfvorrichtung (500), wobei die Sicherheitsprüfvorrichtung (500) konfiguriert ist, in einem Campusnetz eingesetzt zu werden, wobei sie Folgendes umfasst:
ein Empfangsmodul (501), das konfiguriert ist, ein erstes Paket zu empfangen; und
ein Verarbeitungsmodul (502), das konfiguriert ist, das erste Paket zu prüfen, wenn die Sicherheitsprüfung an dem ersten Paket nicht abgeschlossen ist und eine Sicherheitsprüffähigkeit der Sicherheitsprüfvorrichtung ausreichend ist, um das erste Paket zu prüfen; und
das erste Paket zu einer weiteren Sicherheitsprüfvorrichtung zum Prüfen weiterzuleiten, wenn die Sicherheitsprüfung an dem ersten Paket nicht abgeschlossen ist und eine Sicherheitsprüffähigkeit der Sicherheitsprüfvorrichtung unzureichend ist, **dadurch gekennzeichnet, dass** die Sicherheitsprüffähigkeit ein Sicherheitsprüftyp ist, der durch die Sicherheitsprüfvorrichtung geprüft werden kann, und wobei das Verarbeitungsmodul ferner konfiguriert ist:
wenn eine Sicherheitsprüfung eines ersten Typs abgeschlossen ist, aber eine Sicherheitsprüfung eines zweiten Typs an dem ersten Paket nicht abgeschlossen ist und die Sicherheitsprüffähigkeit der Sicherheitsprüfvorrichtung ausreichend ist, um die Sicherheitsprüfung des zweiten Typs an dem ersten Paket auszuführen, die Sicherheitsprüfung des zweiten Typs an dem ersten Paket auszuführen,
wobei die Sicherheitsprüfung des ersten Typs und die Sicherheitsprüfung des zweiten Typs konfiguriert sind, zu verhindern, dass schädlicher Verkehr in dem Campusnetz übertragen wird.

9. Sicherheitsprüfvorrichtung nach Anspruch 8, wobei das Verarbeitungsmodul ferner konfiguriert ist, basierend darauf, ob das erste Paket einen Prüf-Merker aufweist, zu bestimmen, ob die Sicherheitsprüfung an dem ersten Paket abgeschlossen ist.

10. Sicherheitsprüfvorrichtung nach Anspruch 8 oder 9, wobei der Prüf-Merker einem Typ der Sicherheitsprüfung zugeordnet ist.

11. Sicherheitsprüfvorrichtung nach einem der Ansprüche 8 bis 10, wobei das Verarbeitungsmodul ferner konfiguriert ist:
vor dem Prüfen oder Weiterleiten des ersten Pakets, falls ein Prüfdatensatz eines Flusses, zu dem das erste Paket gehört, angibt, dass der Fluss unsicher ist, das erste Paket zu verwerfen.

12. Sicherheitsprüfvorrichtung nach einem der Ansprüche 8 bis 11, wobei die Typen der Sicherheitsprüfung ein Eindringverhinderungssystem und Antivirus umfassen.

13. Sicherheitsprüfvorrichtung nach einem der Ansprüche 8 bis 12, wobei sich die weitere Sicherheitsprüfvorrichtung in einer anderen Schicht des Campusnetzes als jener der Sicherheitsprüfvorrichtung befindet, wobei das Campusnetz eine Zugriffsschicht, eine Aggregationsschicht und eine Kernschicht umfasst.

14. Sicherheitsprüfvorrichtung nach einem der Ansprüche 8 bis 13, wobei das erste Paket von einer Netzvorrichtung in einer anderen Schicht des Campusnetzes als jener der Sicherheitsprüfvorrichtung empfangen wird, wobei das Campusnetz eine Zugriffsschicht, eine Aggregationsschicht und eine Kernschicht umfasst.

15. Computerlesbares Speichermedium, wobei das computerlesbare Speichermedium eine Anweisung speichert, wobei dann, wenn die Anweisung ausgeführt wird, das Verfahren nach einem der Ansprüche 1 bis 7 implementiert wird.

## Revendications

1. Procédé de défense de réseau, comprenant :
la réception (S301), par un dispositif de vérification de sécurité sur un réseau de campus, d'un premier paquet ;
la vérification (S302), par le dispositif de vérification de sécurité, du premier paquet lorsque la vérification de sécurité sur le premier paquet n'est pas terminée et qu'une capacité de vérification de sécurité du dispositif de vérification de sécurité est suffisante pour vérifier le premier paquet ; et
la transmission (S303), par le dispositif de vérification de sécurité à un autre dispositif de vérification de sécurité pour vérification, du premier paquet lorsque la vérification de sécurité sur le premier paquet n'est pas terminée et qu'une capacité de vérification de sécurité du dispositif de vérification de sécurité est insuffisante, **caractérisé en ce que** la capacité de vérification de sécurité est un type de vérification de sécurité qui peut être vérifié par le dispositif de vérification de sécurité et la vérification comprenant :
lorsque la vérification de sécurité de premier type est terminée mais que la vérification de sécurité de deuxième type n'est pas terminée sur le premier paquet et que la capacité de vérification de sécurité du dispositif de vérification de sécurité est suffisante pour réaliser la vérification de sécurité de deuxième type sur le premier paquet, la réalisation, par le dispositif de vérification de sécurité, de la vérification de sécurité de deuxième type sur le premier paquet,
la vérification de sécurité de premier type et la vérification de sécurité de deuxième type étant configurées pour empêcher la transmission de trafic malveillant sur le réseau de campus.

2. Procédé selon la revendication 1, le procédé comprenant en outre :
la détermination, par le dispositif de vérification de sécurité sur la base du fait que le premier paquet a ou non un drapeau de vérification, si la vérification de sécurité sur le premier paquet est terminée.

3. Procédé selon la revendication 1 ou 2, le drapeau de vérification étant associé à un type de vérification de sécurité.

4. Procédé selon l'une quelconque des revendications précédentes, le procédé comprenant en outre :
avant de vérifier ou de transmettre le premier paquet, si un enregistrement de vérification d'un flux auquel appartient le premier paquet indique que le flux n'est pas sûr, le rejet, par le dispositif de vérification de sécurité, du premier paquet.

5. Procédé selon l'une quelconque des revendications précédentes, les types de vérification de sécurité comprenant un système de prévention des intrusions et un antivirus.

6. Procédé selon l'une quelconque des revendications précédentes, l'autre dispositif de vérification de sécurité étant dans une couche différente du réseau de campus que le dispositif de vérification de sécurité, le réseau de campus comprenant une couche d'accès, une couche d'agrégation et une couche centrale.

7. Procédé selon l'une quelconque des revendications précédentes, le premier paquet étant reçu d'un dispositif de réseau dans une couche différente du réseau de campus que le dispositif de vérification de sécurité, le réseau de campus comprenant une couche d'accès, une couche d'agrégation et une couche centrale.

8. Dispositif de vérification de sécurité (500), ledit dispositif de vérification de sécurité (500) étant configuré pour être déployé sur un réseau de campus et comprenant :
un module de réception (501), configuré pour recevoir un premier paquet ; et
un module de traitement (502), configuré pour : vérifier le premier paquet lorsque la vérification de sécurité sur le premier paquet n'est pas terminée et qu'une capacité de vérification de sécurité du dispositif de vérification de sécurité est suffisante pour vérifier le premier paquet ; et transmettre le premier paquet à un autre dispositif de vérification de sécurité pour vérification lorsque la vérification de sécurité sur le premier paquet n'est pas terminée et qu'une capacité de vérification de sécurité du dispositif de vérification de sécurité est insuffisante, **caractérisé en ce que** la capacité de vérification de sécurité est un type de vérification de sécurité qui peut être vérifié par le dispositif de vérification de sécurité et le module de traitement étant en outre configuré pour :
lorsque la vérification de sécurité de premier type est terminée mais que la vérification de sécurité de deuxième type n'est pas terminée sur le premier paquet et que la capacité de vérification de sécurité du dispositif de vérification de sécurité est suffisante pour réaliser la vérification de sécurité de deuxième type sur le premier paquet, réaliser la vérification de sécurité de deuxième type sur le premier paquet,
la vérification de sécurité de premier type et la vérification de sécurité de deuxième type étant configurées pour empêcher la transmission de trafic malveillant sur le réseau de campus.

9. Dispositif de vérification de sécurité selon la revendication 8, le module de traitement étant en outre configuré pour déterminer, sur la base du fait que le premier paquet a ou non un drapeau de vérification, si la vérification de sécurité sur le premier paquet est terminée.

10. Dispositif de vérification de sécurité selon la revendication 8 ou 9, le drapeau de vérification étant associé à un type de vérification de sécurité.

11. Dispositif de vérification de sécurité selon l'une quelconque des revendications 8 à 10, le module de traitement étant en outre configuré pour :
avant de vérifier ou de transmettre le premier paquet, si un enregistrement de vérification d'un flux auquel appartient le premier paquet indique que le flux n'est pas sûr, rejeter le premier paquet.

12. Dispositif de vérification de sécurité selon l'une quelconque des revendications 8 à 11, les types de vérification de sécurité comprenant un système de prévention des intrusions et un antivirus.

13. Dispositif de vérification de sécurité selon l'une quelconque des revendications 8 à 12, l'autre dispositif de vérification de sécurité se trouvant dans une couche différente du réseau de campus que le dispositif de vérification de sécurité, le réseau de campus comprenant une couche d'accès, une couche d'agrégation et une couche centrale.

14. Dispositif de vérification de sécurité selon l'une quelconque des revendications 8 à 13, le premier paquet étant reçu d'un dispositif de réseau dans une couche différente du réseau de campus que le dispositif de vérification de sécurité, le réseau de campus comprenant une couche d'accès, une couche d'agrégation et une couche centrale.

15. Support de stockage lisible par ordinateur, le support de stockage lisible par ordinateur stockant une instruction, et lorsque l'instruction est exécutée, le procédé selon l'une quelconque des revendications 1 à 7 étant mis en oeuvre.
